# EUROPÄISCHE PATENTSCHRIFT

(11) **EP 3 446 081 B1**
(45) Veröffentlichungstag und Bekanntmachung des Hinweises auf die Patenterteilung: **01.02.2023**
(21) Anmeldenummer: 16717635.3
(22) Anmeldetag: 20.04.2016
(51) Int. Cl.: G01G 19/56, G01G 21/22, G01G 23/14, H05B 6/64, A47J 43/07

(54) **SYSTEM UND VERFAHREN ZUM AUTOMATISCHEN ERMITTELN DES GEWICHTS VON NAHRUNGSMITTELN**
SYSTEM AND METHOD FOR AUTOMATICALLY DETERMINING THE WEIGHT OF FOODS
SYSTÈME ET PROCÉDÉ DE DÉTERMINATION AUTOMATIQUE DU POIDS DE PRODUITS ALIMENTAIRES

(43) Veröffentlichungstag der Anmeldung: 27.02.2019
(73) Patentinhaber: Vorwerk & Co. Interholding GmbH, 42270 Wuppertal (DE)
(72) Erfinder: KOETZ, Hendrik, 58300 Wetter (DE)
(74) Vertreter: Bals & Vogel Patentanwälte PartGmbB
(86) Internationale Anmeldenummer: PCT/EP2016/058814
(87) Internationale Veröffentlichungsnummer: WO 2017/182075

(56) Entgegenhaltungen:
- EP-A2- 1 624 725
- JP-A- 2014 098 722
- JP-U- 3 135 150

## Beschreibung

Die vorliegende Erfindung betrifft ein System, insbesondere einen Ofen, sowie ein Verfahren zum automatischen Ermitteln des Gewichts von Nahrungsmitteln.

Systeme und Verfahren zum Ermitteln des Gewichts von Nahrungsmitteln sind im Stand der Technik, beispielsweise in Form von Küchenwaagen, bekannt. Zum Ermitteln des Gewichts von Nahrungsmitteln können die Nahrungsmittel direkt auf die Küchenwaage gelegt werden. Anschließend kann an einer Anzeigevorrichtung auf einfache Weise das Gewicht der Nahrungsmittel abgelesen werden. Dies funktioniert insbesondere bei kompakten Nahrungsmitteln oder Stückware wie Obst, Gemüse oder Fleischwaren besonders einfach.

Schwieriger wird es, wenn man das Gewicht von flüssigen oder pulverförmigen Nahrungsmitteln, wie beispielsweise Mehl, ermitteln möchte. In diesem Fall wird in der Regel ein Nahrungsmittelträger wie beispielsweise eine Schüssel benötigt, in welche das zu wiegende Nahrungsmittel gegeben wird. Stellt man die Schüssel einschließlich des darin befindlichen Mehls nun auf die Küchenwage, ist es anhand der Gewichtsanzeige nicht direkt möglich, das Gewicht des Mehls zu bestimmen, denn die Waage zeigt das Gewicht der Schüssel zusammen mit dem Gewicht des Mehls an. Deshalb muss die Schüssel vor dem Wiegen des Mehls zunächst alleine auf die Küchenwaage gestellt werden. Nachdem sich die Küchenwaage auf einen Wert für das Gewicht eingependelt hat und diesen durch die Anzeigevorrichtung dem Nutzer anzeigt, kann der Nutzer eine Tara-Taste betätigen, um die Gewichtsanzeige wieder auf Null zu stellen. Nun kann das Mehl in die Schüssel gegeben werden und das Gewicht bzw. das Taragewicht desselben durch die Anzeigevorrichtung dem Nutzer angezeigt werden. Dies hat jedoch den Nachteil, dass es relativ lange dauert, bis der Nutzer das Taragewicht des Mehls bzw. der Nahrungsmittel angezeigt bekommt. Außerdem muss der Nutzer mit der Schüssel arbeiten, während diese auf der Küchenwaage steht. Es ist zwar möglich, zunächst die Schüssel auf der Küchenwaage zu wiegen und das ermittelte Gewicht der Schüssel anschließend von einem Gesamtgewicht der Schüssel einschließlich des Mehls zu subtrahieren. Dies ist für einen Nutzer jedoch nicht zufriedenstellend und birgt darüber hinaus die Gefahr, dass sich der Nutzer bei der Subtraktion verrechnet.

Neben einfachen Küchenwaagen sind im Stand der Technik auch Multifunktions-Küchenmaschinen mit integrierter Waage bzw. Wiegevorrichtung bekannt. Derartige Küchenmaschinen weisen hinsichtlich der Wiegevorrichtung jedoch dieselben Probleme auf, wie sie vorstehend bezüglich der Küchenwaage beschrieben sind.

Die Schrift EP 1 624 725 A2 offenbart eine Mikrowelle, die einen Kochvorgang ausführt davon abhängig weiche Menge an Essen sich in der Mikrowelle befindet. Die Schrift JP 2014089722 A offenbart ein System zum Erstellen von Etiketten für ein Lebensmittelgeschäft. Die Schrift JP 3135150 U offenbart ein System zum Wiegen von Objekten mittels RFID.

Aufgabe der vorliegenden Erfindung ist es, die voranstehend beschriebenen Nachteile zumindest teilweise zu beheben. Insbesondere ist es Aufgabe der vorliegenden Erfindung, eine verbesserte und vereinfachte Möglichkeit zum Wiegen von Nahrungsmitteln zur Verfügung zu stellen.

Die voranstehende Aufgabe wird durch die Patentansprüche gelöst. Insbesondere wird die voranstehende Aufgabe durch das System gemäß Anspruch 1, den Nahrungsmittelträger gemäß Anspruch 13 sowie das Verfahren gemäß Anspruch 14 gelöst. Weitere Merkmale und Details der Erfindung ergeben sich aus der Beschreibung und den Zeichnungen. Dabei gelten Merkmale, die im Zusammenhang mit dem System beschrieben sind, selbstverständlich auch im Zusammenhang mit dem erfindungsgemäßen Nahrungsmittelträger sowie dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Gemäß eines ersten Aspekts der vorliegenden Erfindung ist ein System zur Zubereitung von Nahrungsmitteln bereitgestellt, aufweisend ein Gehäuse zur Aufnahme der Nahrungsmittel, eine Erkennungsvorrichtung zum Erkennen wenigstens eines mit dem System koppelbaren Nahrungsmittelträgers und dadurch Erkennen des Gewichts des Nahrungsmittelträgers, sowie eine Ermittlungsvorrichtung zum Ermitteln des Taragewichts der Nahrungsmittel anhand des erkannten Gewichts des Nahrungsmittelträgers.

Dadurch kann auf ein separates Wiegen des Nahrungsmittelträgers einerseits, und einer Kombination des Nahrungsmittelträgers einschließlich der Nahrungsmittel nach dem Betätigen einer Tara-Taste andererseits, verzichtet werden. Anhand der Kenntnis über das Gewicht des Nahrungsmittelträgers lässt sich das Taragewicht schnell und zuverlässig ermitteln.

Außerdem ist es dadurch möglich, das Taragewicht der Nahrungsmittel automatisch oder automatisiert zu ermitteln, d.h., die Ermittlungsvorrichtung ist bevorzugt zum automatischen Ermitteln des Taragewichts der Nahrungsmittel ausgestaltet. Die Ermittlungsvorrichtung ist hierbei insbesondere derart ausgestaltet und konfiguriert, dass das Ermitteln des Gewichts der Nahrungsmittel bei einem Koppeln des Nahrungsmittelträgers, auf oder in welchem die Nahrungsmittel gelagert sind, mit dem System, automatisch durchführbar ist. Dadurch lässt sich das Taragewicht der Nahrungsmittel auf besonders zuverlässige Weise ermitteln. Eine etwaige Rechenarbeit des Nutzers wird in diesem Fall automatisch von der Ermittlungseinheit übernommen. Rechenfehler, die beispielsweise durch ein Kopfrechnen des Nutzers entstehen können, sind dadurch vermeidbar.

Darüber hinaus ist es beim vorliegenden System nicht erforderlich, dass sich der Nahrungsmittelträger auf oder in dem System bzw. auf oder innerhalb des Gehäuses des Systems befindet, um nach einem Beladen des Nahrungsmittelträgers mit Nahrungsmitteln das Taragewicht der Nahrungsmittel zu ermitteln. Anhand der Kenntnis über das Gewicht des Nahrungsmittelträgers kann das Taragewicht der Nahrungsmittel auch dann ermittelt werden, wenn sich die Nahrungsmittel bereits auf dem Nahrungsmittelträger befinden, bevor der Nahrungsmittelträger mit dem Gehäuse gekoppelt wird. Für einen Nutzer ist es so beispielsweise möglich, die Nahrungsmittel auf den Nahrungsmittelträger zu geben, während sich dieser auf einer Arbeitsfläche in der Küche befindet und den Nahrungsmittelträger mit den darauf befindlichen Nahrungsmitteln erst anschließend in das System zu geben, um das Taragewicht der Nahrungsmittel ermitteln zu lassen. Dadurch ist das vorliegende System besonders anwenderfreundlich.

Unter einem Nahrungsmittelträger kann vorliegend ein offenes Gefäß oder ein geschlossenes Gehäuse bzw. ein verschließbarer Behälter verstanden werden. Ein offenes Gefäß kann beispielsweise eine Schüssel oder ein Teller sein. Ein geschlossenes Gehäuse bzw. verschließbarer Behälter kann beispielsweise ein Topf mit Deckel sein.

Unter dem Taragewicht der Nahrungsmittel ist im Sinne der vorliegenden Erfindung das Nettogewicht der Nahrungsmittel, d.h., abzüglich beispielsweise des Gewichts des Nahrungsmittelträgers, zu verstehen. Nahrungsmittel sind vorliegend sowohl im Plural als auch im Singular zu verstehen, da beispielsweise auch ein einzelner Apfel mehrere Nahrungsmittel enthält.

Der koppelbare Nahrungsmittelträger ist mit dem System bevorzugt formschlüssig koppelbar. D.h., das System ist bevorzugt derart ausgestaltet, dass es mit einem passenden Nahrungsmittelträger formschlüssig koppelbar ist. Durch eine formschlüssige Kopplung mit bevorzugt zwei oder mehr Kopplungsflächen des Systems ist es möglich, dass der Nahrungsmittelträger bei einer Kopplung mit dem System stets in einer definierten Relativposition zum Gehäuse angeordnet ist. Dadurch kann der Nahrungsmittelträger besonders einfach und zuverlässig durch die Erkennungsvorrichtung erkannt werden.

Unter der Kopplung zwischen dem System und dem Nahrungsmittelträger ist eine zerstörungsfreie, insbesondere mechanische Kopplung zu verstehen. Die Kopplung zwischen dem System und dem Nahrungsmittelträger kann beispielsweise durch eine Rastoder Clipvorrichtung des Systems herstellbar sein. Unter einer Kopplung kann jedoch auch eine elektrische oder elektromagnetische Kopplung verstanden werden, bei welcher kein mechanischer Kontakt zwischen dem System und dem Nahrungsmittelträger vorliegt. Hierbei ist es denkbar, dass der Nahrungsmittelträger und somit das Gewicht des Nahrungsmittelträgers durch die Erkennungsvorrichtung erkannt werden können, ohne dass eine mechanische Kopplung zwischen dem System und dem Nahrungsmittelträger vorliegt, d.h., ohne dass die Erkennungsvorrichtung einen klassischen Wiegevorgang durchführt.

Die Erkennungsvorrichtung kann an dem Gehäuse, außerhalb des Gehäuses und/oder innerhalb des Gehäuses angeordnet sein. Demnach ist es auch möglich, dass die Erkennungsvorrichtung mehrere Erkennungseinheiten aufweist, die sowohl außerhalb des Gehäuses als auch innerhalb des Gehäuses angeordnet sind. Durch die zumindest außerhalb des Gehäuses angeordnete Erkennungseinheit ist es möglich, den Nahrungsmittelträger bereits dann zu erkennen, wenn der Nutzer diesen in Richtung des Systems bewegt. Dadurch kann auch das Gewicht des Nahrungsmittelbehälters frühzeitig erkannt werden und mithin das Taragewicht in einem anschließenden Ermittlungsprozess schnell ermittelt werden.

Das vorliegende System kann beispielsweise eine Küchenmaschine sein. Das Gehäuse weist einen Innenraum auf, der durch eine Gehäusewandung gegenüber einem Außenraum, d.h., einem Bereich außerhalb der Gehäusewandung, geöffnet werden kann und abschließbar oder absperrbar ist. D.h., das Gehäuse ist bevorzugt vollständig schließbar oder im Wesentlichen vollständig schließbar, sodass der Innenraum gegenüber dem Außenraum vollständig oder im Wesentlichen vollständig absperrbar oder verschließbar ist. Darunter, dass die Nahrungsmittel innerhalb des Gehäuses aufnehmbar sind bedeutet, dass die Nahrungsmittel im Innenraum des Gehäuses aufnehmbar bzw. anordenbar sind.

Zum Ermitteln des Taragewichts stehen die Erkennungsvorrichtung und die Ermittlungsvorrichtung miteinander in Verbindung, insbesondere in elektronischer Kommunikationsverbindung. So kann die Erkennungsvorrichtung erlangte Daten bezüglich des erkannten Nahrungsmittelträgers sowie des Gewichts des Nahrungsmittelträgers an die Ermittlungsvorrichtung übermitteln, welche anhand dieser Daten das Taragewichts der Nahrungsmittel ermitteln kann.

Gemäß einer Weiterbildung der vorliegenden Erfindung ist es möglich, dass das System eine Wiegevorrichtung zum Wiegen des Nahrungsmittelträgers zusammen mit darauf oder darin gelagerten Nahrungsmitteln aufweist und die Ermittlungsvorrichtung zum Ermitteln des Gewichts der Nahrungsmittel anhand einer Subtraktion des erkannten Gewichts des Nahrungsmittelträgers von zumindest dem gewogenen Gewicht des Nahrungsmittelträgers und der darauf oder darin gelagerten Nahrungsmittel ausgestaltet ist. Mittels der Wiegevorrichtung ist es möglich, das Gewicht des Nahrungsmittelträgers mit den darauf oder darin befindlichen Nahrungsmitteln besonders einfach zu bestimmen. Die Subtraktion, die durch die Ermittlungsvorrichtung durchführbar ist, führt außerdem zu einem besonders schnellen und zuverlässigen Ergebnis bezüglich des Taragewichts der Nahrungsmittel. Zum Ermitteln des Taragewichts der Nahrungsmittel stehen die Erkennungsvorrichtung, die Wiegevorrichtung und die Ermittlungsvorrichtung miteinander in Verbindung, insbesondere in elektronischer Kommunikationsverbindung. So kann nicht nur die Erkennungsvorrichtung erlangte Daten bezüglich des erkannten Nahrungsmittelträgers und des Gewichts des Nahrungsmittelträgers, sondern auch die Wiegevorrichtung das gewogene Gewicht bzw. Gesamtgewicht des Nahrungsmittelträgers sowie der darauf oder darin gelagerten Nahrungsmittel an die Ermittlungsvorrichtung übermitteln, welche anhand dieser Daten das Taragewicht der Nahrungsmittel ermitteln bzw. berechnen kann.

Ferner ist es erfindungsgemäß denkbar, dass die Wiegevorrichtung wenigstens einen Dehnungsmessstreifen aufweist, der insbesondere in wenigstens einem Standfuß des Gehäuses angeordnet ist. Dehnungsmessstreifen bilden eine günstige und platzsparende Lösung zum Wiegen des Nahrungsmittelträgers sowie der darauf oder darin befindlichen Nahrungsmittel. Unter dem wenigstens einen Dehnungsmessstreifen ist im weitesten Sinne eine Messeinrichtung zum Erfassen von dehnenden und stauchenden Verformungen zu verstehen. Der vorliegende wenigstens eine Dehnungsmessstreifen ändert bei einer Verformung desselben seinen elektrischen Widerstand und kann dadurch ein entsprechendes Signal an die Ermittlungsvorrichtung übermitteln. Dadurch, dass der wenigstens eine Dehnungsmessstreifen in einem Standfuß oder in einem unteren Bereich bzw. Bodenbereich des Systems oder des Gehäuses angeordnet ist, kann auf einfache Weise sowohl das Gewicht von Objekten auf dem Gehäuse bzw. über dem Gehäuse als auch das Gewicht von Objekten innerhalb des Gehäuses gemessen werden.

Außerdem ist es gemäß der vorliegenden Erfindung möglich, dass das System als Garvorrichtung zum Garen der Nahrungsmittel, insbesondere als Ofen ausgestaltet ist. Unter einer Garvorrichtung ist eine Vorrichtung zu verstehen, mittels welcher Nahrungsmitteln derart Energie, insbesondere in Form von Wärme, zugeführt werden kann, dass die Nahrungsmittel in einen für Menschen genussfähigen Zustand überführt werden oder bezüglich einer Nahrungsmittelqualität verbessert werden können. Die Nahrungsmittelqualität zeichnet sich beispielsweise durch die Bekömmlichkeit und/oder Verwertbarkeit im menschlichen Körper aus. Unter einem Ofen ist im weitesten Sinne eine Vorrichtung zum kontrollierten Erzeugen von Wärme zu verstehen, wobei die Wärme vorliegend zur Zubereitung der Nahrungsmittel nutzbar ist. Unter einem Ofen kann demnach auch eine Mikrowelle oder ein Toaster verstanden werden. Der Ofen weist bevorzugt eine Temperiereinheit auf, die ein zonenweises Temperieren des Innenraums des Gehäuses ermöglicht. Hierzu kann die Temperiereinheit beispielsweise Temperierantennen aufweisen, die einen Energie- bzw. Wärmeeintrag gezielt auf bestimmte Bereiche im Innenraum des Gehäuses bewirken können. Durch den erfindungsgemäßen Ofen bzw. die Garvorrichtung kann ein Nutzer auf die Verwendung einer zusätzlichen Wiegevorrichtung, beispielsweise in Form einer Küchenwaage, verzichten. Dadurch können Kosten und Stauraum gespart werden.

Darüber hinaus ist es gemäß der vorliegenden Erfindung denkbar, dass die Erkennungsvorrichtung einen Code-Scanner zum Erkennen eines Codes, insbesondere eines QR-Codes und/oder eines Barcodes an dem Nahrungsmittelträger, und dadurch zum Erkennen des Nahrungsmittelträgers aufweist. Der Code-Scanner ist bevorzugt innerhalb des Gehäuses angeordnet. Durch den Code-Scanner kann ein geeigneter Nahrungsmittelträger auf schnelle und einfache Weise erkannt werden. Der Code-Scanner kann beispielsweise in einer Gehäusewand bzw. im Gehäuse selbst integriert sein. Dadurch kann ein besonders platzsparendes System geschaffen werden. Im Rahmen der vorliegenden Erfindung ist es auch denkbar, dass der Code-Scanner außerhalb des Gehäuses oder zumindest in Richtung außerhalb des Gehäuses an oder in demselben angeordnet ist. Hierdurch kann der Nahrungsmittelträger bereits erkannt werden, wenn er sich in Richtung des Systems bewegt, d.h., wenn der Nahrungsmittelträger mit dem System, beispielsweise dem Gehäuse, noch nicht in mechanischem Kontakt steht. Selbstverständlich ist es im Rahmen der vorliegenden Erfindung auch denkbar, dass das System mehrere Code-Scanner aufweist, beispielsweise einen wie vorstehend beschriebenen Code-Scanner außerhalb des Gehäuses und einen wie vorstehend beschriebenen Code-Scanner innerhalb des Gehäuses.

Ferner ist es erfindungsgemäß möglich, dass die Erkennungsvorrichtung eine Kamera zum Erkennen der Form des Nahrungsmittelträgers und dadurch zum Erkennen des Nahrungsmittelträgers aufweist, wobei die Kamera insbesondere innerhalb des Gehäuses angeordnet ist. Durch die Kamera kann grundsätzlich jeder beliebige Nahrungsmittelträger erkannt werden. Hierzu kann das System beispielsweise eine Pixelauswertungseinheit aufweisen, welche die mit der Kamera aufgenommenen Bilder auswertet und anhand einer Pixelanalyse den mit der Kamera aufgenommenen Nahrungsmittelträger erkennt. Die Kamera kann beispielsweise in einer Gehäusewand bzw. im Gehäuse selbst integriert sein. Dadurch kann ein besonders platzsparendes System geschaffen werden. Im Rahmen der vorliegenden Erfindung ist es auch denkbar, dass die Kamera außerhalb des Gehäuses oder zumindest in Richtung außerhalb des Gehäuses an oder in demselben angeordnet ist. Hierdurch kann der Nahrungsmittelträger bereits erkannt werden, wenn er sich in Richtung des Systems bewegt, d.h., wenn der Nahrungsmittelträger mit dem System, beispielsweise dem Gehäuse, noch nicht in mechanischem Kontakt steht. Selbstverständlich ist es im Rahmen der vorliegenden Erfindung auch denkbar, dass das System mehrere Kameras aufweist, beispielsweise eine wie vorstehend beschriebene Kamera außerhalb des Gehäuses und eine wie vorstehend beschriebene Kamera innerhalb des Gehäuses.

Gemäß einer Weiterbildung der vorliegenden Erfindung ist es möglich, dass die Erkennungsvorrichtung ein NFC-Modul zum Erkennen des Nahrungsmittelträgers aufweist. Anhand des NFC-Moduls kann ein passender Nahrungsmittelträger, der bevorzugt ein NFC-Gegenmodul aufweist, schnell, einfach und korrekt erkannt werden. Unter einem NFC-Modul ist bevorzugt ein auf RFID-Technologie basiertes Modul zu verstehen, dass zur kontaktlosen Übertragung von Daten geeignet ist. Das NFC-Modul kann hierzu beispielsweise auch ein WLAN-Modul und/oder ein Bluetooth-Modul aufweisen. Das wenigstens eine NFC-Modul kann sowohl innerhalb des Gehäuses als auch außerhalb des Gehäuses angeordnet sein.

Außerdem ist es gemäß der vorliegenden Erfindung möglich, dass die Erkennungsvorrichtung ein magnetisches Schaltmodul zum Erkennen des Nahrungsmittelträgers, insbesondere zum Erkennen eines magnetischen Gegenschaltmoduls des Nahrungsmittelträgers und dadurch zum Erkennen des Nahrungsmittelträgers, aufweist. Anhand des magnetischen Schaltmoduls kann ein passender Nahrungsmittelträger, der bevorzugt ein zugehöriges magnetisches Gegenschaltmodul aufweist, schnell, einfach und korrekt erkannt werden. Unter einem magnetischen Schaltmodul ist bevorzugt ein Magnetschalter zu verstehen, der bei Betätigung desselben ein Signal an die Ermittlungsvorrichtung weiterleitet um dieser dabei Daten bezüglich des Nahrungsmittelträgers und dessen Gewicht zu übermitteln. Das wenigstens eine magnetische Schaltmodul kann sowohl innerhalb des Gehäuses als auch außerhalb des Gehäuses angeordnet sein.

Von weiterem Vorteil ist es gemäß der vorliegenden Erfindung, wenn das System eine Kopplungsvorrichtung zum Koppeln mit dem Nahrungsmittelträger in einer definierten Position im System aufweist, wobei die Kopplungsvorrichtung insbesondere an dem Gehäuse und dabei außerhalb oder innerhalb desselben angeordnet ist. Durch die Kopplungsvorrichtung kann erreicht werden, dass der Nahrungsmittelträger stets in einer definierten Position im System oder am Gehäuse positionierbar ist. Dadurch ist es beispielsweise besonders zuverlässig möglich, den Nahrungsmittelträger und entsprechend das Gewicht des Nahrungsmittelträgers durch den Code-Scanner, die Kamera sowie insbesondere durch das NFC-Modul und das magnetische Schaltmodul zu erkennen. Dadurch, dass der Nahrungsmittelträger durch die Kopplungsvorrichtung stets in derselben Position im System aufnehmbar ist, kann eine besonders zuverlässige Wechselwirkung zwischen beispielsweise dem NFC-Modul und dem NFC-Gegenmodul und/oder zwischen dem magnetischen Schaltmodul und dem magnetischen Gegenschaltmodul erzielt werden. Die Kopplungsvorrichtung ist bevorzugt als mechanische Kopplungsvorrichtung ausgestaltet zum Herstellen einer mechanischen Kopplung zwischen der Kopplungsvorrichtung und dem Nahrungsmittelträger. Die Kopplungsvorrichtung kann hierzu beispielsweise ein Rastund/oder Clipelement für eine bevorzugt formschlüssige Kopplung mit einem zugehörigen Nahrungsmittelträger, der ein korrespondierendes Rast- und/oder Clipelement enthält, aufweisen.

Im Rahmen der vorliegenden Erfindung kann das System außerdem eine Speichervorrichtung aufweisen, in welcher zu verschiedenen Nahrungsmittelträgern zugehörige Gewichtsdaten gespeichert sind. Durch direkten Zugriff auf die Gewichtsdaten in einer systemseitigen Speichervorrichtung kann die Ermittlungsvorrichtung das Taragewicht der Nahrungsmittel erlangen und dem Nutzer entsprechend schnell zur Verfügung stellen. Die Speichervorrichtung weist bevorzugt ein magnetisches oder nichtflüchtiges elektronisches Speichermedium auf. Die Speichervorrichtung kann sowohl innerhalb des Gehäuses als auch außerhalb des Gehäuses zur Verfügung gestellt sein.

Erfindungsgemäß kann es auch von Vorteil sein, wenn das System eine Kommunikationsvorrichtung zum Einholen von Erkennungsdaten über das Internet oder ein anderes kabelgebundenes oder kabelloses Netzwerk zum Erkennen des Nahrungsmittelträgers aufweist. Dadurch können auch Nahrungsmittelträger erkannt werden, die beispielsweise zum Zeitpunkt der Fertigung des vorliegenden Systems noch nicht bekannt waren. Mittels der Kommunikationsvorrichtung hat das System stets Zugriff auf sämtliche Informationen, die zur korrekten Erkennung aller geeigneter Nahrungsmittelträger erforderlich sind. Zwischen der Kommunikationsvorrichtung und der Erkennungsvorrichtung besteht zum Übertragen der Erkennungsdaten eine Kommunikationsverbindung. Die Kommunikationsvorrichtung kann sowohl innerhalb des Gehäuses als auch außerhalb des Gehäuses zur Verfügung gestellt sein.

Außerdem ist es gemäß der vorliegenden Erfindung möglich, dass das System eine Anzeigevorrichtung zum Anzeigen des ermittelten Gewichts der Nahrungsmittel aufweist. Durch die Anzeigevorrichtung kann das Taragewicht der Nahrungsmittel dem Nutzer direkt angezeigt werden, ohne dass dieser zwischenzeitlich eine Tara-Taste betätigen müsste. Die Anzeigevorrichtung ist für den Nutzer einfach lesbar im System, bevorzugt außerhalb des Gehäuses, angeordnet. Die Anzeigevorrichtung weist bevorzugt eine Displayeinheit auf. Die Anzeigevorrichtung kann hierbei in eine Multifunktions-Displayeinheit integriert sein, durch welche auch Betriebsparameter für das System zum Zubereiten der Nahrungsmittel durch den Nutzer eingegeben werden können. Die Displayeinheit ist bevorzugt als Touch-Display ausgestaltet.

Gemäß eines weiteren Aspekts der vorliegenden Erfindung ist ein Nahrungsmittelträger zur Verwendung in einem wie vorstehend beschriebenen System bereitgestellt. Der Nahrungsmittelträger weist einen durch den Code-Scanner auslesbaren Code, ein NFC-Gegenmodul für eine Kommunikation mit dem NFC-Modul und/oder ein magnetisches Gegenschaltmodul für eine Wechselwirkung mit dem magnetischen Schaltmodul, auf. Damit bringt der erfindungsgemäße Nahrungsmittelträger die gleichen Vorteile mit sich, wie sie ausführlich mit Bezug auf das erfindungsgemäße System beschrieben worden sind.

Gemäß eines weiteren Aspekts der vorliegenden Erfindung wird ein Verfahren zum automatischen Ermitteln des Gewichts von Nahrungsmitteln zur Verfügung gestellt. Das Verfahren weist die folgenden Schritte auf:
- Bereitstellen eines Systems zur Zubereitung von Nahrungsmitteln mit einem Gehäuses zur Aufnahme der Nahrungsmittel,
- Erkennen wenigstens eines mit dem System koppelbaren Nahrungsmittelträgers an oder in dem Gehäuse,
- Zuordnen eines Gewichts zu dem erkannten Nahrungsmittelträger, und
- Ermitteln des Taragewichts der Nahrungsmittel anhand des erkannten Gewichts des Nahrungsmittelträgers.

Damit bringt das erfindungsgemäße Verfahren die gleichen Vorteile mit sich, wie sie ausführlich mit Bezug auf das erfindungsgemäße System beschrieben worden sind.

Ferner ist es gemäß der vorliegenden Erfindung möglich, dass Betriebsparameter des Systems, zur Zubereitung der Nahrungsmittel, abhängig vom ermittelten Taragewicht der Nahrungsmittel eingestellt werden. D.h., abhängig vom ermittelten Taragewicht der Nahrungsmittel kann beispielsweise eine Temperatur im Gehäuse oder die Art der Temperierung im Gehäuse eingestellt werden. Wenn das System als Ofen ausgestaltet ist kann so beispielsweise abhängig vom ermittelten Gewicht der Nahrungsmittel bei einer definierten Temperatur ein Umluft-Betrieb oder ein Betrieb mit Ober- und Unterhitze eingestellt werden. Das erfindungsgemäße Verfahren zum Ermitteln des Gewichts von Nahrungsmitteln kann hierbei mit einem wie vorstehend beschriebenen System und insbesondere mit einem wie vorstehend beschriebenen Nahrungsmittelträger durchgeführt werden, wobei die beschriebenen Vorrichtungsmerkmale in entsprechende Verfahrensschritte modifizierbar sind bzw. als entsprechende Verfahrensschritte ausgeführt werden können.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: ein System gemäß einer ersten Ausführungsform der vorliegenden Erfindung,
- Figur 2: ein System gemäß einer zweiten Ausführungsform der vorliegenden Erfindung,
- Figur 3: ein System gemäß einer dritten Ausführungsform der vorliegenden Erfindung,
- Figur 4: ein System gemäß einer vierten Ausführungsform der vorliegenden Erfindung, und
- Figur 5: ein System gemäß einer fünften Ausführungsform der vorliegenden Erfindung.

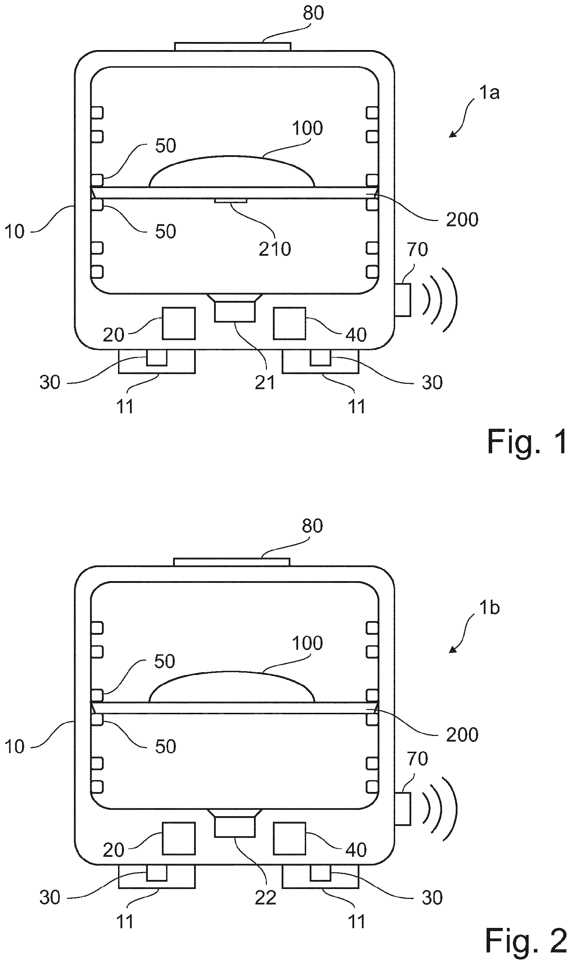

Elemente mit gleicher Funktion und Wirkungsweise sind in den Figuren 1 bis 5 jeweils mit denselben Bezugszeichen versehen.

Fig. 1 zeigt ein als Ofen ausgestaltetes System 1a zur Zubereitung von Nahrungsmitteln 100 gemäß einer ersten Ausführungsform. Das System 1a weist ein Gehäuse 10 zur Aufnahme der Nahrungsmittel 100, vorliegend Brotteig, auf. Das System 1a weist ferner eine Erkennungsvorrichtung 20 zum Erkennen wenigstens eines mit dem System 1a koppelbaren Nahrungsmittelträgers 200 auf. Der als Ofenblech ausgestaltete Nahrungsmittelträger 200 ist in einer schienenartigen Kopplungsvorrichtung 50, die im Innenraum des Gehäuses 10 ausgebildet ist, in einer definierten Position im System 1a gelagert.

Die Erkennungsvorrichtung 10 weist ferner einen Code-Scanner 21 zum Erkennen eines Codes 210 auf. Der Code-Scanner 21 ist in der dargestellten Ausführungsform im Gehäuse 10 bzw. in diesem integriert angeordnet. Der Code 210 ist gemäß Fig. 1 an der Unterseite des Nahrungsmittelträgers 200 angeordnet. Hierbei sei darauf hingewiesen, dass der Code 210 lediglich zur besseren Verständlichkeit als Vorsprung vom Nahrungsmittelträger 200 dargestellt ist. In der Praxis ist der Code 210 vielmehr bündig oder im Wesentlichen bündig mit der Unterseite des Nahrungsmittelträgers 210, beispielsweise als Klebeetikette oder als Aufdruck, platziert. Anhand des Codes 210, der vorliegend ein QR-Code ist, kann der Nahrungsmittelträger 200 automatisch erkannt werden. Dadurch kann auch entsprechend automatisch das Gewicht des Nahrungsmittelträgers 200 erkannt bzw. zugeordnet werden. Hierzu weist das System 1a eine Kommunikationsvorrichtung 70 zum Einholen von Erkennungsdaten über das Internet oder ein anderes Netzwerk auf. Durch die Kommunikationsvorrichtung 70 kann das System 1a sämtliche verfügbaren Gewichtsdaten zu verschiedenen Nahrungsmittelträgern 200, beispielsweise über das Internet, erlangen. Die Kommunikationsvorrichtung 70 ist gemäß Fig. 1a für einen besseren Empfang bzw. eine bessere Sendeleistung zumindest abschnittsweise außerhalb des Gehäuses 10 angeordnet.

Das in Fig. 1 dargestellte System 1a zeigt ferner eine Ermittlungsvorrichtung 40 zum Ermitteln des Taragewichts der Nahrungsmittel 100 anhand des erkannten Gewichts des Nahrungsmittelträgers 200. Die Ermittlungsvorrichtung 40 weist hierzu eine Recheneinheit auf. Wie in Fig. 1 gezeigt, ist die Ermittlungsvorrichtung 40 im Gehäuse 10 integriert ausgestaltet. Das in Fig. 1 gezeigte System 1a weist ferner eine Wiegevorrichtung 30 zum Wiegen des Nahrungsmittelträgers 200 zusammen mit den darauf gelagerten Nahrungsmitteln 100 auf. Die Ermittlungsvorrichtung 40 ist dabei zum Ermitteln des Gewichts der Nahrungsmittel 100 anhand einer Subtraktion des erkannten Gewichts des Nahrungsmittelträgers 200 von dem gewogenen Gewicht des Nahrungsmittelträgers 200 und der darauf oder darin gelagerten Nahrungsmittel 100 ausgestaltet.

Die Wiegevorrichtung 30 weist zwei Dehnungsmessstreifen auf, die in den beiden Standfüßen 11 bzw. Standfußabschnitten des Gehäuses 10 angeordnet sind. Selbstverständlich können auch mehr oder weniger Dehnungsmessstreifen im System bereitgestellt werden. Das System 1a gemäß der ersten Ausführungsform weist ferner eine Anzeigevorrichtung 80 zum Anzeigen des ermittelten Gewichts der Nahrungsmittel 100 auf.

Fig. 2 zeigt ein System 1b gemäß einer zweiten Ausführungsform. Die zweite Ausführungsform unterscheidet sich insbesondere dadurch von der ersten Ausführungsform, dass das System 1b bzw. die Erkennungsvorrichtung 40 an Stelle des Code-Scanners 210 eine Kamera 22 aufweist. Die Kamera ist zum Erkennen der Form des Nahrungsmittelträgers 200 und dadurch zum Erkennen des Nahrungsmittelträgers 200 ausgestaltet. Die Kamera 22 ist ebenso wie der Code-Scanner 21 im Gehäuse 10 integriert ausgestaltet.

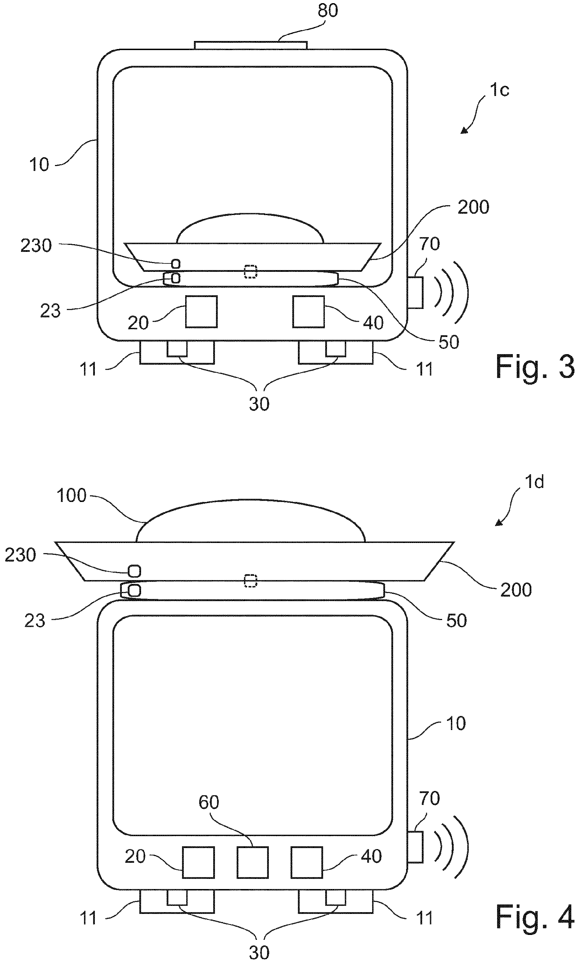

Fig. 3 zeigt ein System 1c gemäß einer dritten Ausführungsform. Die dritte Ausführungsform unterscheidet sich insbesondere dadurch von den anderen Ausführungsformen, dass das System 1b bzw. die Erkennungsvorrichtung 20 ein NFC-Modul 23 aufweist. Das NFC-Modul 23 ist zum Erkennen eines NFC-Gegenmoduls 230, das sich im Nahrungsmittelträger 200 befindet, und dadurch zum Erkennen des Nahrungsmittelträgers 200 ausgestaltet. Das NFC-Modul 23 ist gemäß Fig. 3 in der Kopplungsvorrichtung 50 innerhalb des Gehäuses 10, d.h., im Innenraum des Gehäuses 10, ausgestaltet.

Fig. 4 zeigt ein System 1d gemäß einer vierten Ausführungsform. Die vierte Ausführungsform unterscheidet sich insbesondere dadurch von der dritten Ausführungsform, dass das NFC-Modul 23 in einer Kopplungsvorrichtung 50 außerhalb des Gehäuses 10 und entsprechend außerhalb des Innenraums des Gehäuses 10 ausgestaltet ist. Außerdem weist das in Fig. 4 dargestellte System 1d eine Speichervorrichtung 60 auf, in welcher zu verschiedenen Nahrungsmittelträgern 200 zugehörige Gewichtsdaten gespeichert sind.

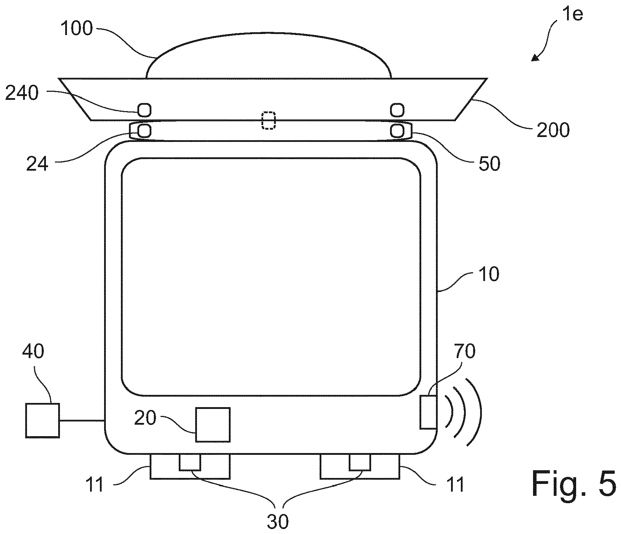

Fig. 5 zeigt ein System 1e gemäß einer fünften Ausführungsform. Die fünfte Ausführungsform unterscheidet sich insbesondere dadurch von den anderen Ausführungsformen, dass das System 1e bzw. die Erkennungsvorrichtung 20 ein magnetisches Schaltmodul 24 aufweist. Das magnetische Schaltmodul 24 ist zum Erkennen eines magnetischen Gegenschaltmoduls 240 im Nahrungsmittelträger 200 und dadurch zum Erkennen des Nahrungsmittelträgers 200 ausgestaltet. Das magnetische Schaltmodul 24 weist zwei Magnetschalter auf. Das magnetische Gegenschaltmodul 240 weist zwei Gegenmagnetschalter auf, die mit den beiden Magnetschaltern korrespondieren bzw. in Wirkverbindung bringbar sind. Das magnetische Schaltmodul 24 ist gemäß Fig. 5 in der Kopplungsvorrichtung 50 außerhalb des Gehäuses 10 und entsprechend außerhalb des Innenraums des Gehäuses 10 ausgestaltet. Fig. 5 unterscheidet sich außerdem dadurch von den anderen Ausführungsformen, dass die Ermittlungsvorrichtung 40 außerhalb des Gehäuses 10 und entsprechend außerhalb des Innenraums des Gehäuses 10 und die Kommunikationsvorrichtung 70 flächenbündig in dem Gehäuse 10 integriert ausgestaltet sind. Eine derartige Modifikation ist selbstverständlich auch bei allen anderen dargestellten und möglichen Ausführungsformen denkbar. Selbiges trifft auf die Erkennungsvorrichtung 20 zu, die sowohl außerhalb des Gehäuses 10 als auch innerhalb des Gehäuses 10 ausgestaltet sein kann.

Anschließend wird mit Bezug auf Fig. 1 ein Verfahren gemäß einer Ausführungsform beschrieben. Bei dem Verfahren wird zunächst das vorstehend im Detail erläuterte System 1a zur Verfügung gestellt. Anschließend wird der Nahrungsmittelträger 200 in den Innenraum des Gehäuses 10 in die Kopplungsvorrichtung 50 geschoben. Nun wird durch die Erkennungsvorrichtung 20, d.h., den Code-Scanner 21, der Code 210 auf der Unterseite des Nahrungsmittelträgers 200 erkannt. Dadurch weiß das System 1a, welcher Nahrungsmittelträger 200 sich im Gehäuse 10 befindet und kann diesem Nahrungsmittelträger 200 das passende Gewicht zuordnen. Gleichzeitig wird mittels der Wiegevorrichtung 30 der Nahrungsmittelträger 200 zusammen mit den darauf gelagerten Nahrungsmitteln gewogen und dadurch ein entsprechendes Gesamtgewicht gemessen. Nun wird das erkannte Gewicht des Nahrungsmittelträgers 200 von dem gewogenen Gesamtgewicht, d.h. dem Gewicht des Nahrungsmittelträgers 200 und der darauf gelagerten Nahrungsmittel 100, subtrahiert. Das Ergebnis dieser Subtraktion ist das Taragewicht des Nahrungsmittels 100. Dieses Ergebnis wird nun auf der Anzeigevorrichtung 80 angezeigt.

Anschließend können Betriebsparameter des Systems 1a zur Zubereitung der Nahrungsmittel 100, wie beispielsweise eine Ofentemperatur, abhängig vom ermittelten Taragewicht der Nahrungsmittel 100 eingestellt werden.

In den Figuren 1 bis 5 sind die Erkennungsvorrichtung 20 und die Ermittlungsvorrichtung 40 als separate Einheiten dargestellt. Die Erkennungsvorrichtung 20 und die Ermittlungsvorrichtung 40 können jedoch auch als miteinander integrierte Einheit, sowohl außerhalb des Gehäuses 10 als auch innerhalb des Gehäuses 10, ausgestaltet sein. Außerdem sei noch darauf hinzuweisen, dass der Code-Scanner 21, die Kamera 22, das NFC-Modul 23 und/oder das magnetische Schaltmodul 24 als integrierter Bestandteil der Erkennungsvorrichtung 20 ausgestaltet sein können, obwohl die entsprechenden Einheiten in den Figuren 1 bis 5 räumlich getrennt voneinander dargestellt sind.

### Bezuaszeichenliste

- 1: System

- 10: Gehäuse
- 11: Standfuß

- 20: Erkennungsvorrichtung
- 21: Code-Scanner
- 22: Kamera
- 23: NFC-Modul
- 24: magnetisches Schaltmodul

- 30: Wiegevorrichtung
- 40: Ermittlungsvorrichtung
- 50: Kopplungsvorrichtung
- 60: Speichervorrichtung
- 70: Kommunikationsvorrichtung
- 80: Anzeigevorrichtung

- 100: Nahrungsmittel

- 200: Nahrungsmittel-Lagergefäß
- 210: Code
- 230: NFC-Gegenmodul
- 240: magnetisches Gegenschaltmodul

## Patentansprüche

1. System (1a; 1b; 1c; 1d; 1e) zur Zubereitung von Nahrungsmitteln (100), aufweisend ein Gehäuse (10) zur Aufnahme der Nahrungsmittel (100), eine Erkennungsvorrichtung (20) zum Erkennen wenigstens eines mit dem System (1a; 1b; 1c; 1d; 1e) koppelbaren Nahrungsmittelträgers (200), wobei das Gewicht des Nahrungsmittelträgers (200) durch die Erkennungsvorrichtung (20) erkennbar ist, sowie eine Ermittlungsvorrichtung (40) zum Ermitteln des Taragewichts der Nahrungsmittel anhand des erkannten Gewichts des Nahrungsmittelträgers (200).

2. System (1a; 1b; 1c; 1d; 1e) nach Anspruch 1,
**dadurch gekennzeichnet,**
**dass** das System (1a; 1b; 1c; 1d; 1e) eine Wiegevorrichtung (30) zum Wiegen des Nahrungsmittelträgers (200) zusammen mit darauf oder darin gelagerten Nahrungsmitteln (100) aufweist und die Ermittlungsvorrichtung (40) zum Ermitteln des Gewichts der Nahrungsmittel (100) anhand einer Subtraktion des erkannten Gewichts des Nahrungsmittelträgers (200) von zumindest dem gewogenen Gewicht des Nahrungsmittelträgers (200) und der darauf oder darin gelagerten Nahrungsmittel (100) ausgestaltet ist.

3. System (1a; 1b; 1c; 1d; 1e) nach Anspruch 2,
**dadurch gekennzeichnet,**
**dass** die Wiegevorrichtung (30) wenigstens einen Dehnungsmessstreifen aufweist, der insbesondere in wenigstens einem Standfuß (11) des Gehäuses (10) angeordnet ist.

4. System (1a; 1b; 1c; 1d; 1e) nach einem der voranstehenden Ansprüche,
**dadurch gekennzeichnet,**
**dass** das System (1a; 1b; 1c; 1d; 1e) als Garvorrichtung zum Garen der Nahrungsmittel (100), insbesondere als Ofen ausgestaltet ist.

5. System (1a) nach einem der voranstehenden Ansprüche,
**dadurch gekennzeichnet,**
**dass** die Erkennungsvorrichtung (20) einen Code-Scanner (21) zum Erkennen eines Codes (210), insbesondere eines QR-Codes und/oder eines Barcodes an dem Nahrungsmittelträger (200), und dadurch zum Erkennen des Nahrungsmittelträgers (200) aufweist, wobei der Code-Scanner (21) insbesondere innerhalb des Gehäuses (10) angeordnet ist.

6. System (1b) nach einem der voranstehenden Ansprüche,
**dadurch gekennzeichnet,**
**dass** die Erkennungsvorrichtung (20) eine Kamera (22) zum Erkennen der Form des Nahrungsmittelträgers (200) und dadurch zum Erkennen des Nahrungsmittelträgers (200) aufweist, wobei die Kamera (22) insbesondere innerhalb des Gehäuses (10) angeordnet ist.

7. System (1c; 1d) nach einem der voranstehenden Ansprüche,
**dadurch gekennzeichnet,**
**dass** die Erkennungsvorrichtung (20) ein NFC-Modul (23) zum Erkennen des Nahrungsmittelträgers (200) aufweist.

8. System (1e) nach einem der voranstehenden Ansprüche,
**dadurch gekennzeichnet,**
**dass** die Erkennungsvorrichtung (20) ein magnetisches Schaltmodul (24) zum Erkennen des Nahrungsmittelträgers (200), insbesondere zum Erkennen eines magnetischen Gegenschaltmoduls (240) des Nahrungsmittelträgers (200) und dadurch zum Erkennen des Nahrungsmittelträgers (200), aufweist.

9. System (1a; 1b; 1c; 1d; 1e) nach einem der voranstehenden Ansprüche,
**dadurch gekennzeichnet,**
**dass** das System (1a; 1b; 1c; 1d; 1e) eine Kopplungsvorrichtung (50) zum Koppeln mit dem Nahrungsmittelträger (200) in einer definierten Position im System (1a; 1b; 1c; 1d; 1e) aufweist, wobei die Kopplungsvorrichtung (50) insbesondere an dem Gehäuse (10) angeordnet ist.

10. System (1d) nach einem der voranstehenden Ansprüche,
**dadurch gekennzeichnet,**
**dass** das System (1) eine Speichervorrichtung (60) aufweist, in welcher zu verschiedenen Nahrungsmittelträgern (200) zugehörige Gewichtsdaten gespeichert sind, und/oder dass das System (1) eine Anzeigevorrichtung (80) zum Anzeigen des ermittelten Gewichts der Nahrungsmittel (100) aufweist.

11. System (1a; 1b; 1c; 1d; 1e) nach einem der voranstehenden Ansprüche,
**dadurch gekennzeichnet,**
**dass** das System (1) eine Kommunikationsvorrichtung (70) zum Einholen von Erkennungsdaten über das Internet oder ein anderes kabelgebundenes oder kabelloses Netzwerk zum Erkennen des Nahrungsmittelträgers (200) aufweist.

12. Nahrungsmittelträger (200) zur Verwendung in einem System (1a; 1b; 1c; 1d; 1e) nach einem der voranstehenden Ansprüche, aufweisend einen durch den Code-Scanner (21) auslesbaren Code (210), ein NFC-Gegenmodul (230) für eine Kommunikation mit dem NFC-Modul (23) und/oder ein magnetisches Gegenschaltmodul (240) für eine Wechselwirkung mit dem magnetischen Schaltmodul (24).

13. Verfahren zum automatischen Ermitteln des Gewichts von Nahrungsmitteln (100) in einem System (1a; 1b; 1c; 1d; 1e) zur Zubereitung von Nahrungsmitteln (100) mit einem Gehäuses (10) zur Aufnahme der Nahrungsmittel (100), insbesondere mit einem System nach einem der Ansprüche 1 bis 12, aufweisend die Schritte:
- Erkennen wenigstens eines mit dem System (1a; 1b; 1c; 1d; 1e) koppelbaren Nahrungsmittelträgers (200) an oder in dem Gehäuse (10),
- Zuordnen eines Gewichts zu dem erkannten Nahrungsmittelträger (200), und
- Ermitteln des Taragewichts der Nahrungsmittel (100) anhand des erkannten Gewichts des Nahrungsmittelträgers (200).

14. Verfahren nach Anspruch 13,
**dadurch gekennzeichnet,**
**dass** Betriebsparameter des Systems (1a; 1b; 1c; 1d; 1e), zur Zubereitung der Nahrungsmittel (100), abhängig vom ermittelten Taragewicht der Nahrungsmittel (100) eingestellt werden.

15. Verfahren nach Anspruch 13 oder 14 zum Ermitteln des Gewichts von Nahrungsmitteln (100) mit einem Nahrungsmittelträger (200) nach Anspruch 12.

## Claims

1. A system (1a; 1b; 1c; 1d; 1e) for preparing foodstuffs (100), comprising a housing (10) for receiving the foodstuffs (100), a detection device (20) for detecting at least one food carrier (200) which can be coupled to the system (1a; 1b; 1c; 1d; 1e), the weight of the food carrier (200) being detectable by the detecting means (20), and determining means (40) for determining the tare weight of the foodstuffs based on the detected weight of the food carrier (200).

2. System (1a; 1b; 1c; 1d; 1e) according to claim 1,
**characterized in that**
the system (1a; 1b; 1c; 1d; 1e) comprises a weighing device (30) for weighing the food carrier (200) together with foodstuffs (100) stored thereon or therein, and the determining means (40) is designed for determining the weight of the foodstuffs (100) on the basis of a subtraction of the detected weight of the food carrier (200) from at least the weighed weight of the food carrier (200) and the foodstuffs (100) stored thereon or therein.

3. System (1a; 1b; 1c; 1d; 1e) according to claim 2,
**characterized in that**
the weighing device (30) has at least one strain gauge, which is arranged in particular in at least one foot (11) of the housing (10).

4. System (1a; 1b; 1c; 1d; 1e) according to any one of the preceding claims,
**characterized in that**
the system (1a; 1b; 1c; 1d; 1e) is designed as a cooking device for cooking the foodstuffs (100), in particular as an oven.

5. System (1a) according to any of the preceding claims,
**characterized in that**
the detection device (20) comprises a code scanner (21) for recognizing a code (210), in particular a QR code and/or a bar code on the food carrier (200), and thereby for recognizing the food carrier (200), wherein the code scanner (21) is arranged in particular within the housing (10).

6. System (1b) according to any of the preceding claims,
**characterized in that**
the detection device (20) comprises a camera (22) for recognizing the shape of the food carrier (200) and thereby for recognizing the food carrier (200), the camera (22) being arranged in particular within the housing (10).

7. System (1c; 1d) according to any one of the preceding claims,
**characterized in that**
the detection device (20) comprises an NFC module (23) for recognizing the food carrier (200).

8. System (1e) according to any of the preceding claims,
**characterized in that**
the detection device (20) comprises a magnetic switching module (24) for recognizing the food carrier (200), in particular for recognizing a magnetic counter-switching module (240) of the food carrier (200) and thereby recognizing the food carrier (200).

9. System (1a; 1b; 1c; 1d; 1e) according to any one of the preceding claims,
**characterized in that**
the system (1a; 1b; 1c; 1d; 1e) comprises a coupling device (50) for coupling with the food carrier (200) in a defined position in the system (1a; 1b; 1c; 1d; 1e), wherein the coupling device (50) is arranged in particular on the housing (10).

10. System (1d) according to any of the preceding claims,
**characterized in that**
the system (1) has a storage device (60) in which weight data associated with various food carriers (200) are stored, and/or **in that** the system (1) has a display device (80) for displaying the determined weight of the food (100).

11. System (1a; 1b; 1c; 1d; 1e) according to any one of the preceding claims,
**characterized in that**
the system (1) comprises a communication device (70) for obtaining detection data via the Internet or another wired or wireless network for recognizing the food carrier (200).

12. A food carrier (200) for use in a system (1a; 1b; 1c; 1d; 1e) according to any one of the preceding claims, comprising a code (210) readable by the code scanner (21), an NFC counter module (230) for communication with the NFC module (23) and/or a magnetic counter switching module (240) for interaction with the magnetic switching module (24).

13. Method for automatically determining the weight of foodstuffs (100) in a system (1a; 1b; 1c; 1d; 1e) for preparing foodstuffs (100) with a housing (10) for receiving the foodstuffs (100), in particular with a system according to any of claims 1 to 12, comprising the steps:
- Detecting at least one food carrier (200) that can be coupled to the system (1a; 1b; 1c; 1d; 1e) on or in the housing (10),
- Assigning a weight to the detected food carrier (200), and
- Determining the tare weight of the foodstuffs (100) based on the detected weight of the food carrier (200).

14. The method according to claim 13,
**characterized in that**
the operating parameters of the system (1a; 1b; 1c; 1d; 1e), for preparing the foodstuffs (100), are set as a function of the determined tare weight of the foodstuffs (100).

15. The method according to claim 13 or 14 for determining the weight of foodstuffs (100) with a food carrier (200) according to claim 12.

## Revendications

1. Système (1a; 1b; 1c; 1d ; 1e) pour la préparation d'aliments (100), comprenant un boîtier (10) pour recevoir les aliments (100), un dispositif de reconnaissance (20) pour reconnaître au moins un poids de l'aliment (100), qui peut être détecté par le système (1a ; 1b ; 1c; 1d ; 1e) ; 1e), le poids du support d'aliments (200) pouvant être détecté par le dispositif de détection (20), ainsi qu'un dispositif de détermination (40) pour déterminer le poids de tare des aliments à l'aide du poids détecté du support d'aliments (200).

2. Système (1a; 1b ; 1c; 1d ; 1e) selon la revendication 1,
**caractérisé en ce que**
le système (1a ; 1b ; 1c; 1d ; 1e) comprend un dispositif de pesage (30) pour peser le support d'aliments (200) conjointement avec des aliments (100) stockés sur celui-ci ou dans celui-ci, et le dispositif de détermination (40) est configuré pour déterminer le poids des aliments (100) à partir d'une soustraction du poids détecté du support d'aliments (200) d'au moins le poids pesé du support d'aliments (200) et des aliments (100) stockés sur celui-ci ou dans celui-ci.

3. Système (1a; 1b ; 1c; 1d ; 1e) selon la revendication 2,
**caractérisé en ce que**
le dispositif de pesage (30) présente au moins une jauge de contrainte, qui est disposée en particulier dans au moins un pied (11) du boîtier (10).

4. Système (1a; 1b ; 1c; 1d ; 1e) selon l'une quelconque des revendications précédentes,
**caractérisé en ce que**
le système (1a; 1b; 1c; 1d ; 1e) est conçu comme un dispositif de cuisson pour cuire les aliments (100), en particulier comme un four.

5. Système (1a) selon l'une des revendications précédentes,
**caractérisé en ce que**
le dispositif de reconnaissance (20) présente un scanner de code (21) pour reconnaître un code (210), en particulier un code QR et/ou un code à barres sur le support d'aliments (200), et ainsi pour reconnaître le support d'aliments (200), le scanner de code (21) étant disposé en particulier à l'intérieur du boîtier (10).

6. Système (1b) selon l'une quelconque des revendications précédentes,
**caractérisé en ce que**
le dispositif de reconnaissance (20) comprend une caméra (22) pour reconnaître la forme du support d'aliments (200) et ainsi pour reconnaître le support d'aliments (200), la caméra (22) étant en particulier disposée à l'intérieur du boîtier (10).

7. Système (1c ; 1d) selon l'une quelconque des revendications précédentes,
**caractérisé en ce que**
le dispositif de reconnaissance (20) comprend un module NFC (23) pour reconnaître le support d'aliments (200).

8. Système (1e) selon l'une quelconque des revendications précédentes,
**caractérisé en ce que**
le dispositif de reconnaissance (20) comprend un module de commutation magnétique (24) pour reconnaître le support d'aliments (200), en particulier pour reconnaître un module de commutation magnétique opposé (240) du support d'aliments (200) et ainsi pour reconnaître le support d'aliments (200).

9. Système (1a; 1b ; 1c; 1d ; 1e) selon l'une quelconque des revendications précédentes,
**caractérisé en ce que**
le système (1a ; 1b; 1c; 1d ; 1e) présente un dispositif de couplage (50) pour le couplage avec le support d'aliments (200) dans une position définie dans le système (1a ; 1b ; 1c ; 1d ; 1e), le dispositif de couplage (50) étant notamment disposé sur le boîtier (10).

10. Système (1d) selon l'une quelconque des revendications précédentes,
**caractérisé en ce que**
**en ce que** le système (1) présente un dispositif de mémoire (60) dans lequel sont mémorisées des données de poids associées à différents supports d'aliments (200), et/ou **en ce que** le système (1) présente un dispositif d'affichage (80) pour afficher le poids déterminé des aliments (100).

11. Système (1a ; 1b ; 1c; 1d ; 1e) selon l'une quelconque des revendications précédentes,
**caractérisé en ce que**
le système (1) comprend un dispositif de communication (70) pour obtenir des données de reconnaissance via l'Internet ou un autre réseau câblé ou sans fil pour reconnaître le support d'aliments (200).

12. Support d'aliments (200) destiné à être utilisé dans un système (1a; 1b ; 1c; 1d ; 1e) selon l'une quelconque des revendications précédentes, comprenant un code (210) lisible par le scanner de code (21), un contre-module NFC (230) pour une communication avec le module NFC (23) et/ou un module de commutation magnétique opposé (240) pour une interaction avec le module de commutation magnétique (24).

13. Procédé de détermination automatique du poids d'aliments (100) dans un système (1a ; 1b ; 1c; 1d ; 1e) de préparation d'aliments (100) comportant un boîtier (10) destiné à recevoir les aliments (100), en particulier avec un système selon l'une des revendications 1 à 12, comprenant les étapes comprenant:
- La détection d'au moins un support d'aliments (200) pouvant être couplé au système (1a ; 1b ; 1c ; 1d ; 1e) sur ou dans le boîtier (10),
- L'attribution d'un poids au support alimentaire reconnu (200), et
- Déterminer le poids de tare des aliments (100) à l'aide du poids détecté du support d'aliments (200).

14. Procédé selon la revendication 13,
**caractérisé en ce que**
des paramètres de fonctionnement du système (1a ; 1b ; 1c ; 1d ; 1e), pour la préparation des aliments (100), sont réglés en fonction du poids de tare déterminé des aliments (100).

15. Procédé selon la revendication 13 ou 14 pour déterminer le poids de produits alimentaires (100) avec un support de produits alimentaires (200) selon la revendication 12.
